# NEUE EUROPÄISCHE PATENTSCHRIFT

(11) **EP 1 904 284 B2**
(45) Veröffentlichungstag und Bekanntmachung des Hinweises auf die Entscheidung über den Einspruch: **16.02.2022**
(45) Hinweis auf die Patenterteilung: 30.05.2018
(21) Anmeldenummer: 06776229.4
(22) Anmeldetag: 13.07.2006
(51) Int. Cl.: B29C 47/92, B29C 47/88

(54) **VERFAHREN ZUR EINSTELLUNG DER FORMATE VON BLASFOLIENSCHLÄUCHEN**
METHOD FOR SETTING THE SIZES OF BLOWN FILM TUBES
PROCEDE DE REGLAGE DES FORMATS DES BOYAUX DE FILMS SOUFFLES

(30) Priorität: 13.07.2005 DE 102005033205
(43) Veröffentlichungstag der Anmeldung: 02.04.2008
(73) Patentinhaber: Windmöller & Hölscher KG, 49525 Lengerich/Westf. (DE)
(72) Erfinder: KULGEMEYER, Tobias, 49170 Hagen (DE); KRAUSE, Ulrich, 49536 Lienen (DE)
(74) Vertreter: Schneider, Bernd
(86) Internationale Anmeldenummer: PCT/EP2006/006873
(87) Internationale Veröffentlichungsnummer: WO 2007/006576

(56) Entgegenhaltungen:
- EP-A- 0 522 278
- EP-A1- 1 616 687
- EP-A2- 1 138 463
- DE-A1- 2 831 212
- DE-C2- 2 721 609
- JP-A- 1 275 123
- US-A- 5 104 593
- US-A- 5 676 893
- US-A1- 2002 076 459
- US-B1- 6 254 368
- US-B2- 7 922 470
- "Folienunterlagen zum", KIEFEL 2005 Sales Meeting, June 2005 (2005-06),
- Ramm, Seidler: Zusammenführen von kalandrierten und extrudier- ten Reifenkomponenten im On-Line -Betrieb,
- Reifenhäuser-Nachrichten Nr. 11, September 1986
- Reifenhäuser-Nachrichten Nr. 14, Oktober 1988
- Reifenhäuser-Nachrichten Nr. 18, Mai 1991
- Jan Lunze: "Regelungstechnik 1 Systemtheoretische Grundlagen Analyse und Entwurf einschleifiger Regelungen", 2004

## Beschreibung

Die Erfindung betrifft ein Verfahren gemäß Anspruch 1. Blasfolienanlagen sind aus zahlreichen Druckschriften (z. B. US 5,288,219) bekannt. Blasfolienanlagen sind in der Regel mit Kühl- beziehungsweise Temperiereinrichtungen versehen. Der Sinn dieser Kühlungseinrichtungen, welche in der Regel Gebläse umfassen, besteht in einer Kühlung der heißen, gerade extrudierten Kunststoffschmelze und der aus der Schmelze durch Auskühlung entstehenden Folie.
Oft werden die Folienschläuche sowohl von außen als auch von innen gekühlt. Die Innenkühlung bringt besondere technische Probleme mit sich, da die gerade extrudierten Folienschläuche oft eine geschlossene Folienblase bilden, aus der die Kühlungsluft auch wieder heraus muss.
Der Übergang des Folienmaterials von einer Kunststoffschmelze zu einer immer noch sehr heißen Folie findet bei modernen Extrusionsanlagen in der Regel kurz nach der Extrusion der Schmelze aus einem dafür vorgesehenen Ringspalt statt. Der Ort, an dem sich die Schmelze zur Folie wandelt, wird oft fälschlicherweise als "Frostlinie" bezeichnet. In der Realität ist diese Übergangsstelle jedoch ein ringförmiger Bereich der Umfangsfläche des Schmelze- beziehungsweise Folienschlauches. Dieser Bereich besitzt eine durchaus nennenswerte Ausdehnung in der Transportrichtung des Folienschlauches, die von einigen Millimetern bis zu einigen Dutzend Zentimetern reichen kann. In diesem Bereich nehmen die ungeordneten Makromoleküle der Schmelze zumindest teilweise eine geordnete oder zumindest geordnetere Kristalitstruktur an. Obwohl es bei Kunststoffen eben nicht zu einem schlagartigen, definierten Phasenübergang - wie er beim Übergang von Wasser zu Eis stattfinden kann - kommt, ändern sich die Eigenschaften der Folienschmelze durch diese Wandlung zur immer noch sehr heißen Folie doch in einer für die Folienherstellung maßgeblichen Weise. So vermindert sich die Reckfähigkeit und steigert sich die Stabilität und Widerstandsfähigkeit des Folienmaterials durch diesen Übergang entscheidend. Der angesprochene Übergangsbereich wird aufgrund der Parallelen zum Gefrieren von Wasser im Folgenden "Frostbereich" genannt.
Aufgrund der Änderung des Reckverhaltens und der Widerstandsfähigkeit beim Durchlauf durch den Frostbereich werden die oft bei der Blasfolienherstellung verwendeten Kalibrierkörbe (siehe EP 1 488 910 A1) oberhalb des Frostbereiches angebracht beziehungsweise die Lage des Frostbereichs wird durch eine Variation der Kühl- oder Temperiereinrichtungen so gesteuert, dass sich der Frostbereich unterhalb des Kalibrierkorbes befindet.
Wenn der Frostbereich in den Kalibrierkorb hineinwandert, kann der Kalibrierkorb die Folienschmelze beschädigen. In diesem Fall ist es auch wahrscheinlich, dass das weichere Schmelzematerial vor Erreichen des Kalibrierkorbes einen "Bauch" ausbildet, das heißt, dass der Durchmesser des Schlauches vor Erreichen des Kalibrierkorbes größer ist als der des Kalibrierkorbes. Auch dieser Zustand ist höchst unerwünscht und wird von den Maschinenbedienern mit einer Regelung der Gebläse beantwortet, um Kühlverhalten und Innendruck der Folienblase anzupassen. Aufgrund der Schwierigkeiten, die diese Regelung mit sich bringt und der Trägheit derselben kommt es hierbei nicht selten zu einem Pumpverhalten im Bereich des dem Kalibrierkorb vorgelagerten "Bauches". Dieses Pumpverhalten führt zu umfangreichen Folienschäden oder gar zum Abriss der Folienblase.
Ein Frostbereich, der zu weit vor dem beziehungsweise unterhalb des Kalibrierkorbes liegt, kann dazu führen, dass die Folie nicht im gewünschten Maße ausgereckt wird und das gewünschte Format nicht erreicht. Auch bei Blasfolienanlagen ohne Kalibrierkorb ist die Einstellung der Lage des Frostbereichs von großer Bedeutung.

Eine besondere Herausforderung stellt die Einstellung des Frostbereichs bei Formatwechseln dar, die zur Abarbeitung eines neuen Auftrags durchgeführt wurden. Oft sind die Beträge der Formatumstelungen in diesem Zusammenhang besonders groß und Überschreiten die Änderung bei Regelungsvorgängen während der Bearbeitung um ein Vielfaches.

Bei einem Formatwechsel, bei dem sich bedeutende physikalische Größen zwischen dem Ausgangsformat und dem Endformat nennenswert ändern, ist es sehr schwer, die Lage des Frostbereichs zu optimieren. Mit dem Wort "optimieren" ist im vorliegenden Zusammenhang gemeint, dass der Frostbereich nach einem Formatwechsel sowohl eine andere als auch eine gleiche Position in der Transportrichtung des Folienschlauchs als Solllage einnehmen kann. Oft ändert sich die Sollposition des Frostbereichs von Auftrag zu Auftrag, was auch eine Änderung der Position des Kalibrierkorbes notwendig machen kann.
Da sich auch eine Messung der Lage des Frostbereichs nach dem Stand der Technik zumindest bei vielen Folienmaterialien sehr schwierig gestaltet, ist der Maschinenbediener bei dieser Arbeit auf seine Erfahrung, sein Gefühl und auf viel Geduld angewiesen. Oft versucht der Maschinenbediener insbesondere bei der Formatumstellung die Lage der Frostlinie zu ertasten (also quasi zu messen), um sinnvolle Gebläseeinstellung durch die Bedienung von Steuerungsknöpfen oder Luftklappen in den Gebläseleitungen vornehmen zu können. Diese Arbeiten sind anstrengend und langwierig. Solange die Lage des Frostbereiches nicht optimiert ist, wird Folie minderer Qualität hergestellt.

Die EP 1 138 463 A2 offenbart ein Verfahren zur Regelung des Schlauchdurchmessers, wobei hier auch eine Anpassung der Regelung nach einer Schlauchdurchmesseränderung beschrieben wird. Die US 5 676 893 A beschäftigt sich ebenfalls mit einer Schlauchdurchmesserregelung, wobei auch eine Schlauchdurchmesseränderung erwähnt wird. Die US 2002/0076459 A1 beschreibt ein System zum Anfahren einer Blasfolienanlage und besonderer Berücksichtigung der Menge der Innenkühlluft. Ein Verfahren gemäß dem Oberbegriff des Anspruchs 1 ist in der DE 27 21 609 C2 offenbart.

Daher besteht die Aufgabe der vorliegenden Erfindung darin, ein Verfahren zur Einstellung der Formate von Folienschläuchen, welche von Blasfolienanlagen extrudiert werden, vorzuschlagen,
- bei dem das Folienschlauchformat von einem Ausgangsformat eines Folienschlauches auf ein Endformat eines Folienschlauches umgestellt wird
- und bei dem während der Formatumstellung die Lage des Frostbereiches durch eine Einstellung der Leistung der Kühlgebläseleistung optimiert wird, das für den Maschinenbediener komfortabler und schneller durchführbar ist.

Diese Aufgabe wird durch Anspruch 1 gelöst. Für die Zwecke der vorliegenden Anmeldung wird unter dem Begriff Formatwechsel eine Änderung der physikalischen Parameter der Folienblase verstanden. Zu diesen physikalischen Parametern zählen vor allem der Durchmesser der Folienblase (möglicherweise am Frostbereich oder im Kalibrierkorb zu messen, wird in der Regel jedoch nachträglich über die Breite des flachgelegten Folienschlauches ermittelt), die natürlich zu einer Veränderung der Fläche der Folie führt. Ein anderer wichtiger physikalischer Parameter ist der (Massen)Durchsatz der Extrusionsanlage pro Zeiteinheit. Auch die Abzugsgeschwindigkeit kann sich ändern und von Wichtigkeit sein. Natürlich führt auch eine Änderung des Folienmaterials, die man auf den ersten Blick als chemische Änderung verstehen würde, zu einer Änderung physikalischer Parameter, wie der Extrudattemperatur, der Temperatur, bei der der Frostbereich durchschritten wird, der Wärmekapazität der Folie usw. Auch diese Größen können physikalische Parameter im Sinne dieser Anmeldung sein.
Das Wort Parameter versteht sich damit als kennzeichnende Größe, mit deren Hilfe Aussagen über den Aufbau und die Leistungsfähigkeit der Anlage möglich sind. In der Regel betrifft oder ist ein solcher physikalischer Parameter eine physikalische Größe, die durch Maßeinheit und Maßzahl quantifizierbar ist.
Der Formatwechsel kann durch eine "bewusst" oder "gesteuert" herbeigeführte Änderung beipielsweise bei einem Auftragswechsel herbeigeführt werden. Eine bewusste Änderung wäre beispielsweise eine Änderung eines oder mehrerer physikalischer Parameter, die ein Maschinenbediener beim Auftragswechsel durchführt. Eine gesteuerte Änderung könnte eintreten, wenn die Steuervorrichtung automatisch, beispielsweise aufgrund einer abgespeicherten Arbeitsanweisung, solche Veränderungen vornimmt. Diese Arten von Formatwechseln können sowohl während der laufenden Produktion als auch bei Stillstand der Anlage durchgeführt werden.
Im Sinne der vorliegenden Anmeldung tritt ein Formatwechsel jedoch auch dann ein, wenn innerhalb des laufenden Produktionsbetriebes Regelungs- oder Steuerungsvorgänge stattfinden, die physikalische Parameter betreffen. Solche Vorgänge werden in der Regel veranlasst, um die Beschaffenheit der Folie und des gesamten Produktionsprozesses innerhalb der Toleranzbereiche um bestimmte Sollwerte zu halten.
Auch diese Form der Änderung des Folienschlauchformats kann von dem Maschinenbediener vorgenommen oder automatisch veranlasst werden. In der Regel liegen diesen Änderungen Messwerte zugrunde, die beispielsweise die Lage des Frostbereichs betreffen. Daher kann man diese Änderungen im weitesten Sinne als Regelungsverfahren für das Folienschlauchformat bezeichnen. Die auftragsbezogene Variante des Formatwechsels kann man auch einfach als Auftragswechsel oder Formatumstellung bezeichnen.

Es ist einzusehen, dass sich weitere physikalische Größen als Folge der Änderung der genannten Größen ändern. Zu diesen Größen gehört zum Beispiel die Foliendicke, die zum Beispiel vom Extrudatdurchsatz pro Zeiteinheit, von der Abzugsgeschwindigkeit und dem Durchmesser der Folienblase abhängt.
Alle diese und weitere Größen, die sich bei auftragsbezogenen Änderungen verändern, können physikalische Größen im Sinne dieser Anmeldung sein.
Das erfindungsgemäße Verfahren kommt aber oft mit einer Teilmenge all dieser Größen aus. Es hat sich durch theoretische und praktische Untersuchungen gezeigt, dass auf einige der aufgelisteten und tatsächlich veränderten Größen bei der Durchführung des erfindungsgemäßen Verfahrens verzichtet werden kann.
Des weiteren wird das Wort "Steuerung" als Unterbegriff zu Regelung verstanden, das heißt dass die Steuerung und die Steuersignale im Sinne der vorliegenden Druckschrift auch Bestandteile einer Regelung sein können.
Mit Kühlgebläseleistung ist die Wirkung der Leistung des Kühlgebläses zu verstehen. In erster Linie wird hierdurch der Luftdurchsatz pro Zeiteinheit beeinflusst. In der Regel geschieht dies nach dem Stand der Technik durch Klappen, die in den oder am Ende der Gebläseleitungen angebracht sind und deren Stellung den Luftdurchsatz beeinflusst. Bei dem erfindungsgemäßen Verfahren ist es von besonderem Vorteil, wenn die Gebläseleistung lediglich über die Drehzahl der Ventilatoren eines, mehrerer oder gar aller Kühlgebläse der Blasfolienanlage vorgenommen wird. In diesem Fall kann die Steuerung der Kühlluftzufuhr klappenlos vorgenommen werden. So ergibt sich ein besonders stetiger Verlauf der Änderung der Kühlgebläseleistung. Eine Drehzahländerung kann unter anderem durch eine Änderung des Betrages des drehmomentbildenden Stromes, aber auch durch Bremsen an den Ventilatoren vorgenommen werden.

Physikalische Parameter, die vorteilhafterweise zur Durchführung des erfindungsgemäßen Verfahrens genutzt werden können, sind auch physikalische Parameter von Zwischenformaten. So ist es zum Beispiel denkbar, dass die Steuervorrichtung bei einer Änderung der Fläche der Folienblase Zwischenwerte zwischen Anfangs- und Endformat ermittelt und diese bei der Generierung der Steuersignale berücksichtigt.
Überhaupt gehört die Fläche der Folienblase - die ja in bekannter Weise von verwandten Größen wie dem Durchmesser der Folienblase abgeleitet werden kann - zu den wichtigeren Parametern. Bei der Größe der Folienblase ist die Fläche des Teils derselben von besonderem Interesse, der sich zwischen ringförmigen Spalt und Frostbereich (hier vor allem Solllage) oder, wenn man so will, zwischen ringförmigem Spalt und Kalibrierkorb erstreckt. Ein anderer sehr wichtiger Parameter ist der Extrudatdurchsatz pro Zeiteinheit.
Eine Möglichkeit, den Werten der physikalischen Parameter Steuersignale zuzuordnen, besteht darin, diesen Werten in Datenbanken Informationen zuzuordnen. Der Fachmann bezeichnet solche Datenbanken häufig als Kalibriertabelle. Die Informationen können Daten sein, die bei der Generierung der Steuersignale zugrunde gelegt werden. Es können jedoch auch gleich die Steuersignale selbst in einer solchen Datenbank abgelegt werden.
Die Informationen können empirisch oder rechnerisch ermittelt worden sein. Oft wird man jedoch auch "Mischverfahren" anwenden, das heißt man wird, ausgehend von empirischen Werten, mit analytischen oder numerischen Methoden Parameteränderungen berücksichtigen. Es hat sich jedoch gezeigt, dass bei der Anwendung des erfindungsgemäßen Verfahrens bereits dann gute Ergebnisse erzielt werden, wenn physikalische Parameter von der Steuervorrichtung direkt mit Hilfe von Rechenvorschriften weiter veredelt und so bei der Generierung der Steuersignale berücksichtigt werden.
Insbesondere bei einer zunächst ausschließlich durch einen Auftragswechsel bedingten Formatumstellung kann "direkt" in diesem Zusammenhang heißen, dass während oder kurz vor der Umstellung keine Messungen oder ähnliches stattfinden, sondern dass die Maschinensteuerung der Änderung der Gebläseleistung lediglich physikalische Parameter der gewünschten eingestellten Anfangs- und Endzustände zugrunde legt (natürlich könnten auch hier die Anfangszustände gemessen worden sein). Insbesondere bei der Folienfläche zwischen Kalibrierkorb beziehungsweise Frostbereich und Ringspalt des Blaskopfes und den der Fläche verwandten physikalischen Größen wie Höhe des Kalibrierkorbes ist ein solches Verfahren vorteilhaft.

Trotz all dieser positiven Befunde ist es oft von Vorteil, wenn der Maschinenbediener weitere Einstellungen - in der Regel Feineinstellungen - vornimmt. Dieser Umstand ist unter anderem darin begründet, dass eben in der Regel bei erfindungsgemäßen Verfahren nicht alle physikalischen Parameter der komplexen Zusammenhänge berücksichtigt werden können. So sind zum Beispiel einige Änderungen der Umwelteinflüsse wie der Umgebungstemperatur und von Zugluft durchaus nicht ohne Einfluss auf die Lage des Frostbereichs.
Oft wird sich jedoch nach einem Formatwechsel mit oder ohne Zusatzeinstellungen des Bedieners ein statischer Zustand einstellen, der der Produktion der Folie sehr zu Gute kommt.
Bei langen Produktionszyklen werden sicherlich immer wieder neue Feineinstellungen vorgenommen, um beispielsweise der Änderung von Umwelteinflüssen gerecht zu werden.
Die auf diese Weise erreichten statischen Zustände eignen sich sehr gut als Ausgangszustand für die erfindungsgemäße Steuerung der Kühlgebläseleistung:
Es hat sich gezeigt, dass es oft vorteilhafter ist, die Änderungen der Kühlgebläseleistungen ausgehend von dem tatsächlich eingestellten Anfangszustand der Gebläseleistungswerte vorzunehmen als von irgendwelchen errechneten oder empirisch ermittelten Werten auszugehen, die man im Speicher der Steuerungsvorrichtung abgelegt hat. Dieser Umstand ist in der Regel der oben beschriebenen ständigen feinfühligen Anpassung der Gebläseleistung an sich ändernde äußere Parameter geschuldet.

Zu den Vorteilen der klappen- oder ventillosen Regelung im Zusammenhang mit der vorliegenden Erfindung ist noch einmal Folgendes anzumerken:
Offenbar führt die schnelle Regelung der Gebläseleistung mit den Klappen zu zu starken, oft unstetigen Änderungen der Gebläseleistung, welche unter anderem die nachstehend genanten unerwünschten Entwicklungen nach sich ziehen können:
- eine zu schnelle Verschiebung der Frostlinie über das gewünschte Maß hinaus,
- ein Pumpverhalten der Folienblase (oben angesprochen) oder
- ein Zusammenfallen (Kolabieren) der Folienblase.

Es hat sich gezeigt, dass noch größere Unstetigkeiten auftreten können, wenn in Folge der Betätigung der Klappe in dem betroffenen Luftstrom zum Beispiel Phasenübergänge zwischen laminaren und turbulenten Strömungen auftreten.

Versuche haben gezeigt, dass eine Beeinflussung der Drehzahl zumindest eines Lüftungsrotors mit Hilfe der Mittel zur Ableitung und Umwandlung von Bewegungsenergie zu einer ausreichend schnellen aber stetigeren Änderung der Kühlgebläseleistung führt.
Mit "Ableitung und Umwandlung von Bewegungsenergie" ist zunächst jede Maßnahme gemeint, die die Rotationsbewegung des Lüftungsrotors bremst.
In diesem Zusammenhang ist auch die Bedeutung des Wortes "zuschaltbar" zu beachten. Gemeint ist, dass die "Mittel zur Ableitung und Umwandlung von Bewegungsenergie" eben bei Bedarf zuschaltbar sind.
Die zuschaltbare Ableitung und Umwandlung von Bewegungsenergie kann in diesem Zusammenhang auch durch mechanische Bremsen vorgenommen werden, welche Bewegungsenergie während eines Bremsvorgangs beispielsweise in mechanische oder durch Reibung in thermische Energie umsetzen. Wirbelstrombremsen können kinetische Energie durch Induktion und Ohmschen Widerstand ebenfalls in thermische Energie wandeln.
Eine im Betrieb andauernde bzw. inhärente Wandlung von kinetischer Energie (beispielsweise durch Reibung in den Lagern des Lüftungsrotors oder durch Luftwiderstand) ist durch das Attribut zuschaltbar ausgeschlossen.
Bei Lüftungsrotoren, die mit Elektromaschinen angetrieben werden, ist es vorteilhaft, wenn die Motoren einen Leistungssteller umfassen, welcher die Elektromaschine so beschalten kann, dass diese im generatorischen Betrieb arbeitet. In dieser Situation wird der Rotor gebremst und Bewegungsenergie des Rotors wird in elektrische Energie gewandelt. Diese ist aus dem Stromkreis der betreffenden Elektromaschine auszuscheiden. Dies kann durch eine Rückspeisung dieser Energie ins Stromnetz vorgenommen werden. Hierzu kann eine weitere leistungselektronische Vorrichtung, oft Endstufe genannt, vorgesehen werden. Es hat sich gezeigt, dass bei solchen Rückspeisevorgängen jedoch Probleme mit der elektromagnetischen Verträglichkeit in dem angesprochenen Stromnetz aufkommen können.
Eine weitere vorteilhafte Möglichkeit besteht in dem "Verbrennen" des anfallenden Stromes durch einen Bremswiderstand (Wandlung in Wärmeenenergie durch Widerstand).
Die Zuführung des "freigewordenen" (aus der kinetischen Energie der Rotationsbewegung gewandelten) elektrischen Stromes zu einem weiteren Elektromotor hilft jedoch, Energie zu sparen. Hierbei ist es vorteilhaft, wenn es sich bei der weiteren Elektromaschine um ein Maschinenelement handelt, welches hauptsächlich im Dauerbetrieb läuft und dabei möglichst gleichförmig elektrische Leistung benötigt. Insbesondere in tropischen Ländern kann auch ein Belüftungsmotor der Klimaanlage für die Extruderhalle diese Anforderungen erfüllen.
In diesem Zusammenhang sind jedoch auch Elektromaschinen zu nennen, die an der Außenkühlung derselben oder einer anderen Blasfolienanlage mitwirken. Auch die Motoren der Extruder arbeiten während des Dauerbetriebs der Anlage gleichmäßig.
Die meisten Brems- oder Regelvorgänge fallen im Bereich der Innenkühlung an, weshalb sich hier alle erfindungsgemäßen Maßnahmen am Meisten empfehlen. Es ist von großem Vorteil Elektromaschinen, die der Innenkühlung zugeordnet sind, bei Bedarf generatorisch zu betreiben und den gewonnenen Strom den Motoren anderer Gebläse zuzuführen.
Trotz der eingangs geschilderten Nachteile der Steuerung und Regelung der Gebläseleistung beziehungsweise des Blasluftstroms durch Klappen, kann es doch von Vorteil sein, solche an der Blasfolienanlage vorzusehen und insbesondere bei Änderungen großen Betrags einzusetzen.
In diesem Zusammenhang können durch die bremsbaren Lüftungsrotoren auch Ausgleichsmaßnahmen bei zu unstetigen Gebläseleistungsänderungen vorgenommen werden.
Erfindungsgemäß ist vorgesehen, dass zumindest ein Teil der Anlagenkomponenten, bei denen bei dem Formatwechsel Änderungen ihrer Einstellungen vorgenommen werden, diese Änderungen zeitversetzt erfahren. Zu den betroffenen Komponenten können zunächst alle Vorrichtungen gehören, mit denen sich physikalische Parameter einstellen lassen. Vor allem sind mit Anlagenkomponenten im vorliegenden Zusammenhang jedoch Vorrichtungen gemeint, die direkt oder indirekt Einfluss auf den extrudierten Folienschlauch nehmen. Das sind zunächst die zur Kalibrierung und Führung des Folienschlauches vorgesehenen Komponenten, die oft in Berührung mit der Folie oder dem Folienschlauch geraten.
Gemäß der Erfindung gehören unter anderem der oder die Kalibrier- oder Stützkörbe, die Schlauchzentralführung, die Seitenfalteneinrichtung, die Flachlegeeinrichtung und die Abquetscheinrichtung dazu. Diese Anlagenkomponenten gelten als erfindungsgemäße folienführende Elemente, auch wenn bei einem Teil dieser Elemente ein direkter Kontakt zwischen der Folie und der Anlagenkomponente beispielsweise durch ein Luftpolster vermieden wird. Die "Änderung" beim betreffenden Formatwechsel besteht bei diesen Komponenten vor allem in einer Anpassung derselben an den jeweiligen Schlauchquerschnitt. Hierzu können zum Beispiel auch Kalibrierkörbe vorgesehenen werden, die von der Steuervorrichtung automatisch "geändert" (v.a. Einstellung des Innendurchmessers) werden können.
Neben diesen schlauchführenden Anlagenkomponenten haben auch noch andere Komponenten direkten Einfluss auf den gerade extrudierten Folienschlauch. Zu diesen Anlagenkomponenten gehören die verschiedenen Innen- und Außenkühleinrichtungen. Bei diesen Kühleinrichtungen ist die Änderung in der Regel bei dem physikalischen Parameter Luftvolumen pro Zeiteinheit oder Temperatur der Kühlluft vorzunehmen. Mittlerweile werden Anlagen mit einer Abfolge verschiedener Innen- und Außenkühleinrichtungen ausgestattet. So ist es bekannt zwei oder mehr Außen- oder Innenkühlringe oder andere Außen- oder Innenkühlvorrichtungen in Transportrichtung der Folie hintereinander anzuordnen. Es hat sich ebenfalls als vorteilhaft erwiesen, die Zeitpunkte zu denen Änderungen der Gebläseleistung oder Lufttemperatur vorgenommen werden, zwischen diesen unterschiedlichen Kühlvorrichtungen (Kühlvorrichtungen sind Anlagenkomponenten) zu variieren - also einen Zeitversatz vorzunehmen. So kann die Leistung des dem ersten Außenkühlring zugeordneten Gebläses früher geändert werden als die des zweiten oder die Leistung der gesamten Innenkühlung früher als die der Außenkühlung.
Mit "zeitversetzt" ist in der vorliegenden Druckschrift gemeint, dass die Änderung zu verschiedenen Zeitpunkten vorgenommen wird oder wirksam wird. "Sukzessive" ist demzufolge ein Unterbegriff zu zeitversetzt, bei dem eine Abfolge stärker betont wird.
Es bleibt festzuhalten, dass an verschiedenen Anlagen verschiedene dieser Maschinenkomponenten vorhanden sind. Oft wird man nur Teilmengen der hier aufgeführten Komponenten finden. Man wird jedoch auch mehr oder andersartige Komponenten finden. Wichtig für die Zwecke dieser Anmeldung ist vor allem, dass diese Maschinenkomponenten Einfluss auf die Folie nehmen und bei der Formatumstellung eine Änderung erfahren.
Erfindungsgemäß ist eine sukzessive Änderung an unterschiedlichen Anlagenkomponenten im laufenden Produktionsbetrieb (hier Gutproduktion) da eine abrupte Umstellung aller Komponenten hier zu zu großen Unstetigkeiten führen kann. Diese Unstetigkeiten können starke Schwankungen physikalischer Parameter der Folie auslösen, die dann wieder ausgeregelt werden müssen. Auch Auftragswechsel können jedoch vorgenommen werden, während die Anlage Material extrudiert. Ein in dieser Weise vorgenommener Auftragswechsel ist in höchstem Maße vorteilhaft wenn so ein Abriss der Folienblase und die damit verbundenen Zeitverlust vermieden werden können.

Erfindungsgemäß ist vorgesehen, dass die Änderungen an den unterschiedlichen Anlagenkomponenten zumindest zum Teil in der Abfolge vorgenommen werden, in der diese Komponenten Einfluss auf die Folie (in der Transportrichtung der Folie) nehmen. Die folienführenden Komponenten nehmen natürlich durch ihre Berührung oder ihre Fürung Einfluss, während bei den Kühlvorrichtungen der Ort der größten Kühlwirkung maßgeblich ist.
Auch die Geschwindigkeit, mit der die Einstellung der Komponenten bei den unterschiedlichen Komponenten aufeinander abfolgt, ist mit der Geschwindigkeit, mit der die Folie an den jeweiligen Komponenten "vorbei" gefördert wird, korreliert.
Durch die dargestellten, bewusst oder gesteuert, als Teil eines Auftragswechsels oder eines Regelvorganges vorgenommenen Formatänderungen kann es passieren, dass sich der Durchmesser des extrudierten Folienschlauches so ändert, dass der flachgelegte Folienschlauch oder die bereits aufgeschnittene Flachfolienbahn zu breit für die zumindest eine der Anlage nachgeordnete Wickelstelle wird. Es ist von Vorteil, wenn die Steuervorrichtung der Anlage in diesem Fall ein Warnsignal oder eine Warnmeldung ausgibt. Zu diesem Zweck sollte es möglich sein, dieser Maschinensteuerung die Breite der Wickelstelle mitzuteilen oder eine allfällige Kommunikation dieser Daten zwischen den Steuervorrichtungen der Anlage und der Wickelstelle zu ermöglichen.
Eine längerfristige Gutproduktion führt in aller Regel zu einem Einschwingen der ihr zugrunde liegenden physikalischen Parameter, wobei die nich gänzlich zu unterdrückenden Änderungen der äußeren Umstände (z. B. Hallentemperatur) zu ständigen Änderungen durch Einstell- Steuer- oder Regelvorgänge führen können.
Trotz dieser Umstände liegt es natürlich in der Absicht eines jeden Maschinenbedieners, möglichst schnell einen einigermaßen statischen Produktionszustand zu erreichen, bei dem die physikalischen Produktionsparameter nur noch mäßig um bestimmte Sollwerte schwanken. Tests haben jedoch ergeben, dass zur möglichst schnellen Herbeiführung eines solchen Zustands zunächst physikalische Parameter einzustellen sind, die sich in überraschender Höhe (Betrag) von den Sollparametern der Gutproduktion unterscheiden.

Daher ist es vorteilhaft, wenn in der Steuervorrichtung zumindest zwei Klassen physikalischer Parameter abgelegt sind, die jeweils bestimmten Endformaten zugeordnet sind,
wobei die erste Klasse physikalischer Parameter Sollwerte für den laufenden Produktionsbetrieb (Gutproduktion) eines Auftrages umfasst,
und wobei die zumindest eine zweite Klasse physikalischer Parameter Sollwerte für den Anfahrbetrieb des betreffenden Auftrages umfasst.
Es können auch mehrere Stufen von "Anfahrbetriebszuständen" definiert werden, die sukzessive von der Maschinensteuerung angefahren werden. In der Sprache dieser Druckschrift wären mehrere zweite Klassen physikalischer Parameter in der Steuervorrichtung abgelegt. Die Anwendung dieser Lehre ist - wie die Lehre sämtlicher Unteransprüche - auch dann von Vorteil, wenn nicht die Leistung des einen oder der verschiedenen Kühlgebläses aufgrund der Signale der Steuereinrichtung geändert wird. Vielmehr ist die Lehre dieser Druckschrift auch dann vorteilhaft verwendbar, wenn die Kühlgebläseleistung konstant bleiben kann und ausschließlich an anderen Anlagenkomponenten oder physikalischen Parametern geändert werden kann.
In Bezug auf die Gewinnung der Sollwerte für Anfahr- und Produktionsbetrieb ist wieder zu sagen, dass diese empirisch oder rechnerisch gewonnen werden können. Die Steuervorrichtung der Anlage ist entsprechend zu beaufschlagen. In diesem Zusammenhang wird von Vorteil sein rezeptabhängige Anfahr- und Produktionsparameter zu speichern oder Rechenvorschriften zur Bestimmung derselben vorzusehen.
Die Sollwerte für den Anfahrbetrieb sind auch dann zu verwenden, wenn in Folge eines kurzen Anlagenstillstandes ein neues Anfahren der Anlage notwendig wird.
In diesem vorgenannten Fall ist es - mit oder ohne Sollwerte für den Anfahrbetrieb - von großem Vorteil die Anlage mit einer Art "Kurzzeitgedächtnis zu versehen, das automatisch (regelmäßiges automatisches abspeichern) oder auf Veranlassung des Maschinenbedieners, die augenblicklichen Produktionsparameter genau abspeichert. Auf diese Weise "merkt" sich die Maschine beispielsweise bei der Gutproduktion nicht nur die allgemeinen Sollwerte, sondern auch die sich genau - aufgrund der oben erwähnten ständigen Änderungen durch Einstell- Steuer oder Regelvorgänge - ergebenen augenblicklich eingestellten physikalischen Parameter.
Kommt es in einer solchen Situation zu einer gewollten (z. B. Maschinenreinigung) oder ungewollten (z. B. ungewollter Folienriss oder Stromausfall) Produktionsunterbrechung, so kann die Anlage sogleich mit dem Ziel, die kurz zuvor im Dauerbetrieb optimierten Parameterwerte zu erreichen, angefahren werden. Diese Verfahrensfortbildung spart Zeit, Geld und gegebenenfalls hochqualifizierte Personalressourcen.

Weitere Ausführungsbeispiele der Erfindung gehen aus der gegenständlichen Beschreibung und den Ansprüchen hervor.
Die einzelnen Figuren zeigen:
- Fig. 1: Skizze einer Blasfolienanlage
- Fig. 2: Skizze eines Blaskopfes
- Fig. 3: Skizze einer Blasfolienanlage mit weiteren Anlagenkomponenten

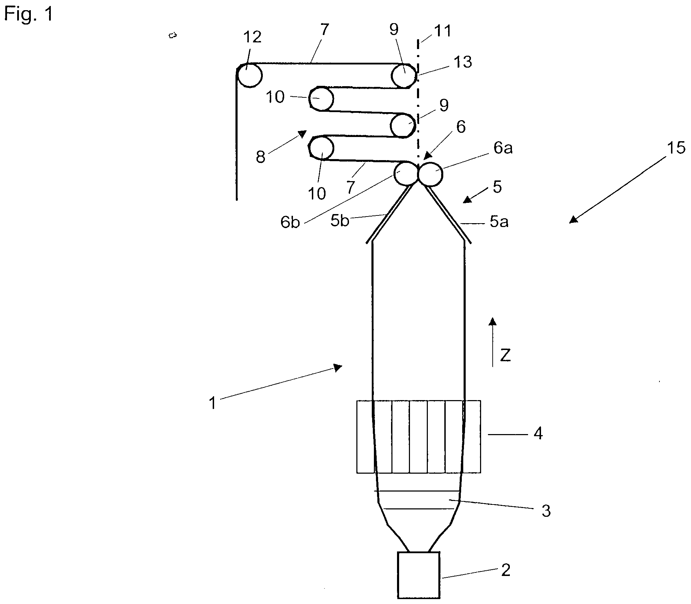

Fig. 1 zeigt eine Skizze einer Blasfolienanlage 15, bei der ein Blasfolienschlauch 1 von einem Blaskopf 2 extrudiert und in der Förderrichtung z weg gefördert wird. Auf die Darstellung von Gebläse oder Kühlvorrichtungen wurde in Figur 1 verzichtet. Das Material des Blasfolienschlauches 1 liegt zunächst noch als schmelzeartiges Extrudat vor. In dem Frostbereich 3 geht das Extrudat jedoch in Folie über, die anschließend den Kalibrierkorb 4 durchläuft. In der Flachlegeeinrichtung 5 wird der Folienschlauch zwischen den Flachlegeplatten 5a und 5b flach gelegt und in der Abquetschvorrichtung 6 zu den Abquetschwalzen 6a und 6b abgequetscht. Der Folienschlauch 1 liegt dann in Form des flachgelegten Folienschlauches 7 vor. Dieser durchläuft die Reversiervorrichtung 8, die mit Wendestangen 10 und Umlenkwalzen 9 ausgestattet ist. Die strichpunktierte Linie 11 bezeichnet die Symmetrielinie des Blasfolienschlauches 1. Nach dem Durchlaufen der Reversiervorrichtung 8 wird der flachgelegte Folienschlauch 7 über die Transportwalze 12 weiter geleitet. In der Regel wird der flachgelegte Folienschlauch anschließend einer Wickelstelle zugeführt.

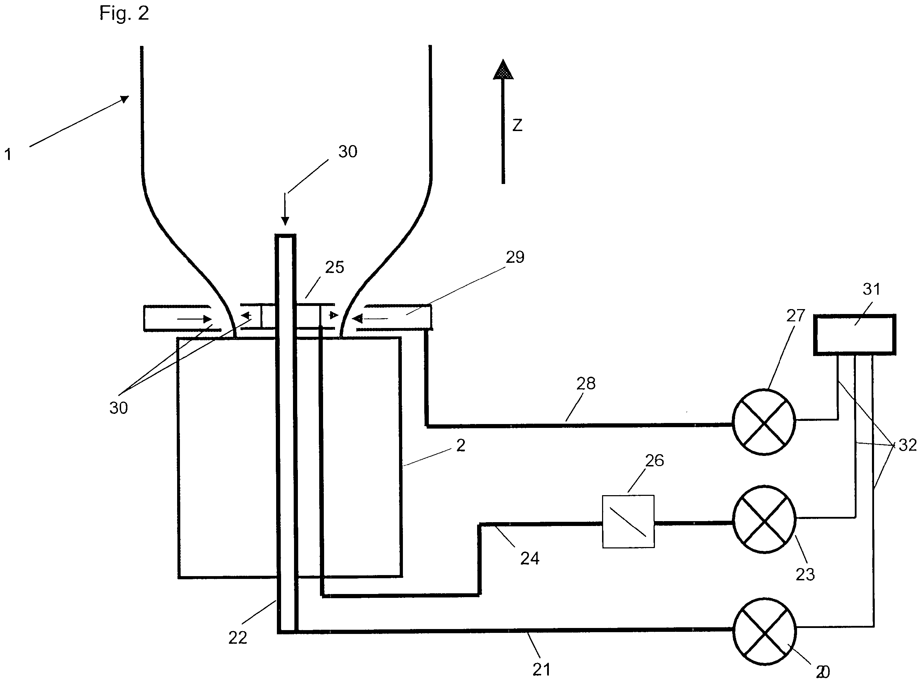

In Figur 2 sind verschiedene Kühlgebläseeinrichtungen, auf deren Darstellung in Figur 1 verzichtet wurde, dargestellt. Die Kühlgebläseeinrichtung 20 entnimmt in der Regel über die Luftableitung 21 und das Entlüftungsrohr 22 Luft aus dem Inneren des Folienschlauches 1. Das Luftvolumen, das von dieser Gebläseeinrichtung 20 aus dem Inneren des Schlauchs abgeleitet wird, ist im wesentlichen gleich dem Luftvolumen pro Zeiteinheit, welches von der Gebläseeinrichtung 23 über die Luftzuleitung 24 dem Innenkühlring 25 zugeleitet und von diesem in das Innere des Folienschlauches 1 geblasen wird. Oft ist gerade das Luftzuleitungsrohr 24 mit einer Klappenvorrichtung 26 versehen, mit welchem die Luftzuleitung in das Innere des Folienschlauches gesteuert oder geregelt werden kann. Das Gebläse 27 leitet Luft über die Luftzuleitung 28 zu dem Außenkühlring 29, welcher die Luft auf den Folienschlauch 1 extrudiert. Die verschiedenen Pfeile 30 deuten jeweils die Richtung der Luft oder des Luftstromes an. Über die Luftgebläseleistung kann die Lage der Frostlinie, welche in Figur 1 mit dem Bezugszeichen 3 versehen ist, optimiert werden. Eine stärkere Kühlleistung führt dazu, dass sich die Frostlinie näher an dem Blaskopf 2 ausbildet. Ein Sinken der Gebläseleistung führt dazu, dass sich der Frostbereich 3 in Richtung der Förderrichtung z des Blasfolienschlauches bewegt. Die Kühlgebläseleistung kann durch die Drehzahl der Ventilatorenräder beeinflusst werden; es ist jedoch auch möglich, Klappen 26 zu diesem Zweck einzusetzen. Es hat sich gezeigt, dass bei der Anwendung des erfindungsgemäßen Verfahrens die Variation der Umdrehungsgeschwindigkeit der Ventilatoren vorteilhaft ist, da sich mit ihnen stetigere Veränderungen des Kühlluftstromes bewerkstelligen lassen. Bei dem erfindungsgemäßen Verfahren wird die Steuerung der Kühlgebläseleistung mit der Steuervorrichtung 31 vorgenommen. In Figur 2 ist die Steuervorrichtung 31 mit den Kühlgebläsen 20, 23 und 27 über die Steuerleitungen 32 verbunden.

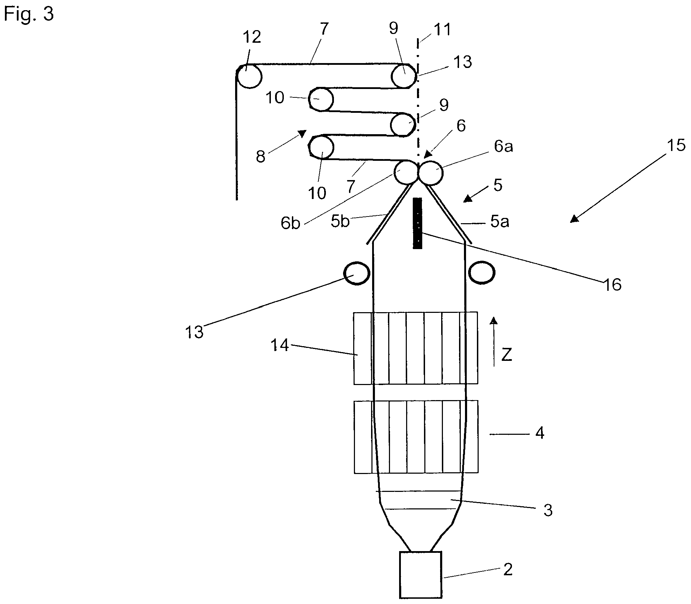

In Figur 3 ist eine weitere Blasfolienanlage wie in Figur 1 gezeigt. In Figur 3 wurden dieselben Bezugszeichen verwendet. Es wurden jedoch zusätzlich die Anlagenkomponenten zweiter Kalbrierkorb 14, Schlauchzentralführung 13 und Seitenfalteneinrichtung 16 gezeigt. Die Maschinenkomponenten gehören gemeinsam mit den bereits in Figur 1 gezeigten Komponenten, erster Kalibrierkorb 4, Flachlegung 5 und Abquetschung 6 zu den folienführenden Maschinenkomponenten. Weitere Anlagenkomponenten, die Einfluss auf die Folie haben sind die Kühlringe 29 und 25, die nur in Figur 2 gezeigt wurden. Man kann jedoch auch mehrere solcher Kühlringe in Förderrichtung z der Folie "übereinander" oder hintereinader anordnen. Als vorteilhaft hat sich eine sukzessive "Änderung" oder Verstellung all dieser Anlagenkomponenten erwiesen. Die Reihenfolge derselben kann von der Lage der Einflusszone der jeweiligen Maschinenkomponente auf den Folienschlaich 1 abhängen.
Vor dem Hintergrund des bereits ausgeführten ist es von Vorteil, wenn alle in Frage kommenden Anlagekomponenten automatisch umgestellt ("geändert") werden können und wenn diese Änderung von der Steuervorrichtung vorgenommen werden kann.

| **Bezugszeichenliste** | |
|---|---|
| 1 | Blasfolienschlauch |
| 2 | Blaskopf |
| 3 | Frostbereich |
| 4 | Kalibrierkorb |
| 5 | Flachlegeeinrichtung |
| 5a | Flachlegeplatten |
| 5b | Flachlegeplatten |
| 6 | Abquetschvorrichtung |
| 6a | Abquetschwalze |
| 6b | Abquetschwalze |
| 7 | Folienschlauch |
| 8 | Reversiervorrichtung |
| 9 | Umlenkwalzen |
| 10 | Wendestangen |
| 11 | Symmetrielinie des Blasfolienschlauches 1 |
| 12 | Transportwalze |
| 13 | Schlauchzentralführung |
| 14 | zweiter Kalibrierkorb |
| 15 | Blasfolienanlage |
| 16 | Seitenführung bzw. Seitenfaltenvorrichtung |
| 17 | |
| 18 | |
| 19 | |
| 20 | Kühlgebläseeinrichtung |
| 21 | Luftableitung |
| 22 | Entlüftungsrohr |
| 23 | Gebläseeinrichtung |
| 24 | Luftzuleitung |
| 25 | Innenkühlring |
| 26 | Klappenvorrichtung |
| 27 | Gebläse |
| 28 | Luftzuleitung |
| 29 | Außenkühlring |
| 30 | Pfeile zur Andeutung des Luftstromes |
| 31 | Steuervorrichtung |
| 32 | Steuerleitung |
| | |
| z | Förderrichtung |

## Patentansprüche

1. Verfahren zur Einstellung der Formate von Folienschläuchen (1), welche von Blasfolienanlagen (15) extrudiert werden,
- bei dem das Folienschlauchformat von einem Ausgangsformat eines Folienschlauches (1) auf ein Endformat eines Folienschlauches (1) umgestellt wird,
- und bei dem während der Formatumstellung die Lage des Frostbereiches (3) durch eine Einstellung der Leistung der Kühlgebläse (20, 23, 27) optimiert wird,
- wobei zur Umstellung des Folienschlauchformats eine auftragsbezogene Änderung der physikalischen Parameter vorgenommen wird, wobei zu den physikalischen Parametern die Fläche der Folienblase (1) und/oder der Extrudatdurchsatz pro Zeiteinheit und/oder die Abzugsgeschwindigkeit und/oder die Solllage der Frostlinie (3) in der axialen Richtung (z) der Folienblase (1) gehören,
- in der Steuervorrichtung (31) die physikalische Parameter des Ausgangs- und des Endformats des Folienschlauchs (1) abgelegt werden,
- dass die Steuervorrichtung (31) diese physikalischen Parameter bei der Generierung von Steuersignalen berücksichtigt,
- und dass diese Steuersignale der Steuerung der Kühlgebläseleistung zugrunde liegen,
- wobei zumindest ein Teil von schlauchführenden Anlagenkomponenten zur Anpassung an den jeweiligen Schlauchquerschnitt beim Formatwechsel Änderungen erfahren, wobei diese Änderungen zeitversetzt erfolgen,
- wobei der Formatwechsel durchgeführt wird, während die Anlage Folienmaterial extrudiert,
- wobei bei zumindest einem Teil der Anlagekomponenten, bei denen Änderungen der Einstellungen vorgenommen werden, diese Änderung sukzessive vorgenommen werden, wobei die Reihenfolge, in der Änderungen an den unterschiedlichen Anlagekomponenten vorgenommen werden, der Reihenfolge entspricht, in der diese Anlagenkomponenten in der Förderichtung (z) der Folie Einfluss auf das Kunststoffextrudat beziehungsweise die extrudierte Folie nehmen,
**dadurch gekennzeichnet, dass**
- die Zeitspanne, die zwischen Änderungen an unterschiedlichen Anlagekomponenten vergeht, weitgehend der Zeitspanne entspricht, die ein bestimmter Folienmaterialabschnitt bei der augenblicklichen Anlagengeschwindigkeit zum Zurücklegen des Abstandes zwischen den Einflussbereichen der betreffenden Anlagenkomponenten benötigt.

2. Verfahren nach Anspruch 1,
**dadurch gekennzeichnet, dass**
die Steuervorrichtung (31) aufgrund physikalischer Parameter des Ausgangs- und des Endformats physikalische Parameter der Zwischenformate ermittelt.

3. Verfahren nach einem der vorstehenden Ansprüche,
**dadurch gekennzeichnet, dass**
- in einer Speichervorrichtung der Steuervorrichtung (31) Informationen abgelegt sind,
- die bestimmten Werten der physikalischen Parameter zugeordnet sind,
- und die bei Vorliegen dieser Werte dieser physikalischen Parameter bei der Generierung der Steuersignale berücksichtigt werden.

4. Verfahren nach dem vorstehenden Anspruch,
**dadurch gekennzeichnet, dass**
die in der Speichervorrichtung abgelegten Informationen aufgrund empirischer Werte einprogrammiert oder mit Hilfe von Rechenvorschriften gewonnen sind.

5. Verfahren nach einem der vorstehenden Ansprüche,
**dadurch gekennzeichnet, dass**
eine Rechenvorrichtung nach bestimmten Rechenvorschriften aus Werten physikalischer Parametern Anweisungen zur Generierung von Steuersignalen generiert.

6. Verfahren nach einem der vorstehenden Ansprüche,
**dadurch gekennzeichnet, dass**
zumindest eines der an der Kühlung der Folienblase (1) beteiligten Gebläse (20, 23, 27) klappenlos mit seiner Luftauslassöffnung verbunden ist.

7. Verfahren nach dem vorstehenden Anspruch,
**dadurch gekennzeichnet, dass**
alle an der Kühlung der Folienblase (1) beteiligten Gebläse (20, 23, 27) klappenlos mit ihrer Luftauslassöffnung verbunden sind.

8. Verfahren nach einem der vorstehenden Ansprüche,
**dadurch gekennzeichnet, dass**
ein Maschinenbediener Feineinstellungen der Gebläseleistung vornimmt, nachdem die Steuervorrichtung (31) mit Hilfe der Steuersignale die Gebläsewerte eingestellt hat, die sie dem Endformat zuordnet.

9. Verfahren nach einem der vorstehenden Ansprüche,
**dadurch gekennzeichnet, dass**
die Steuervorrichtung (31) bei der Bestimmung der Steuersignale die bei der Produktion der Blasfolie im Anfangsformat eingestellten Gebläseeinstellungen berücksichtigt.

10. Verfahren nach dem vorstehenden Anspruch,
**dadurch gekennzeichnet, dass**
die Steuervorrichtung (31) bei der Bestimmung der Steuersignale von den bei der Produktion der Blasfolie im Anfangsformat eingestellten Gebläseeinstellungen ausgeht und aufgrund der physikalischen Parameter des Endzustands Änderungen an den Gebläseeinstellungen vornimmt.

11. Verfahren nach einem der vorstehenden Ansprüche,
**dadurch gekennzeichnet, dass**
zu den Anlagenkomponenten, an denen Änderungen zeitversetzt oder sukzessive vorgenommen werden, auch die Gebläse gehören, die unterschiedlichen Kühlvorrichtungen zugeordnet sind.

12. Verfahren nach einem der vorstehenden Ansprüche,
**dadurch gekennzeichnet, dass**
die Steuervorrichtung ein Warnsignal ausgibt, wenn durch eine Formatänderung die Breite der flachgelegten Folie die maximale Arbeitsbreite der Wickelvorrichtung überschreitet.

13. Verfahren nach einem der vorstehenden Ansprüche,
**dadurch gekennzeichnet, dass**
in der Steuervorrichtung zumindest zwei Klassen physikalischer Parameter abgelegt sind, die jeweils bestimmten Endformaten zugeordnet sind,
wobei die erste Klasse physikalischer Parameter Sollwerte für den laufenden Produktionsbetrieb eines Auftrages umfasst,
und wobei die zumindest eine zweite Klasse physikalischer Parameter Sollwerte für den Anfahrbetrieb des betreffenden Auftrages umfasst.

14. Verfahren nach einem der vorstehenden Ansprüche
**dadurch gekennzeichnet, dass**
vor einer kurzzeitigen Produktionsunterbrechung augenblicklich eingestellte physikalische Parameter zwischengespeichert werden,
und dass diese zwischengespeicherten physikalischen Parameter bei der Wiederaufnahme der Produktion entweder wieder eingestellt werden,
oder der Bestimmung physikalischer Parameter für den Anfahrbetrieb zugrunde gelegt werden.

## Claims

1. A method for setting the formats of film tubes (1), which are extruded by blown film lines (15),
- in which the film tube format is converted from an initial format of a film tube (1) to a final format of a film tube (1),
- and in which during the format conversion the position of the frost area (3) is optimized by an adjustment of the output of the cooling fan (20, 23, 27),
- wherein in order to convert the film tube format, an order-related change of the physical parameters is made, wherein the surface of the film bubble (1) and/or of the extrudate throughput per unit of time and/or the haul-off speed and/or the target position of the frostline (3) in the axial direction (z) of the film bubble (1) are among the physical parameters,
- the physical parameters of the initial and the final format of the film tube (1) are stored in the control device (31),
- that the control device (31) takes these physical parameters into account when generating control signals,
- and that these control signals are used to control the cooling fan output,
- wherein at least part of the tube-guiding system components for adapting to the respective tube cross-section when the format is being changed undergo changes, wherein these changes occur with a time delay,
- wherein the format change is carried out, while the system is extruding film material,
- wherein in the case of at least a part of the system components, in which changes are made to the settings, these changes are made successively, wherein the order, in which changes are made to the different system components, corresponds to the order, in which these system components exert influence on the plastic extrudate or the extruded film in the conveying direction (z) of the film,
**characterized in that**
- the length of time, which elapses between changes to different system components, largely corresponds to the length of time, which a certain film material section needs at the current system speed to cover the distance between the areas of influence of the relevant system components.

2. The method according to claim 1,
**characterized in that**
the control device (31) determines physical parameters of the intermediate formats based on physical parameters of the initial and the final format.

3. The method according to any one of the preceding claims,
**characterized in that**
- information is stored in a storage device of the control device (31),
- the specific values of the physical parameters are assigned,
- and when these values of said physical parameters are available, these are taken into account when generating the control signals.

4. The method according to the preceding claim,
**characterized in that**
the information stored in the storage device is programmed in on the basis of empirical values and obtained with the aid of calculation rules.

5. The method according to any one of the preceding claims,
**characterized in that**
the calculating device generates instructions for the generation of control signals from values of physical parameters according to specific calculation rules.

6. The method according to any one of the preceding claims,
**characterized in that**
at least one of the fans (20, 23, 27) involved in cooling the film bubble (1) is connected to its air outlet opening in a flapless manner.

7. The method according to the preceding claim,
**characterized in that**
all of the fans (20, 23, 27) involved in cooling the film bubble (1) are connected to their air outlet opening in a flapless manner.

8. The method according to any one of the preceding claims,
**characterized in that**
a machine operator makes fine adjustments in the fan output, after the control device (31) has set the fan values with the aid of the control signals, which it assigns to the final format.

9. The method according to any one of the preceding claims,
**characterized in that**
the control device (31) when determining the control signals takes into account the fan settings set in the initial format during the production of the blown film.

10. The method according to the preceding claim,
**characterized in that**
the control device (31) when determining the control signals assumes the fan settings set during the production of the blown film in the initial format and based on the physical parameters of the final state makes changes to the fan settings.

11. The method according to any one of the preceding claims,
**characterized in that**
the fans, which are assigned to different cooling devices, are also among the system components, to which changes are made with a delay or successively.

12. The method according to any one of the preceding claims,
**characterized in that**
the control device emits a warning signal, when the width of the film laid flat exceeds the maximum working width of the wrapping device due to a format change.

13. The method according to any one of the preceding claims,
**characterized in that**
in the control device at least two classes of physical parameters are stored, which in each case are assigned specific final formats,
wherein the first class of physical parameters comprises target values for the ongoing production operation for an order,
and wherein the at least one second class of physical parameters comprises target values for the start-up operation of the relevant order.

14. The method according to any one of the preceding claims,
**characterized in that**
parameters that are currently set before a brief production interruption are temporarily stored,
and that these temporarily stored physical parameters are either reset when the production resumes,
or are taken as the basis for the determination of physical parameters for the start-up operation.

## Revendications

1. Procédé de fabrication des formats de gaines de film (1), qui sont extrudées par d'extrusion par soufflage (15),
- dans lequel le format de gaine de film est converti d'un format initial d'une gaine de film (1) en un format final d'une gaine de film (1),
- et dans lequel, pendant la conversion de format, la position de la zone de gel (3) est optimisée par un réglage de la puissance des ventilateurs de refroidissement (20, 23, 27),
- dans lequel, pour la conversion du format de gaine de film, une modification, spécifique à la commande, des paramètres physiques est effectuée, dans lequel, aux paramètres appartiennent la surface de la bulle de film (1) et/ou le débit d'extrudat par unité de temps et/ou la vitesse d'aspiration et/ou la position de consigne de la ligne de gel (3) dans la direction axiale (z) de la bulle de film (1),
- dans le dispositif de commande (31), sont enregistrés les paramètres physiques du format initial et du format final de la gaine de film (1),
- le dispositif de commande (31) prend en compte des paramètres physiques lors de la génération de signaux de commande,
- et ces signaux de commande permettent le contrôle de la puissance des ventilateurs de refroidissement,
- dans lequel au moins une partie des composants de l'installation guidant la gaine subissent, pour l'adaptation à la section transversale de gaine respective, des modifications lors du changement de format, dans lequel ces modifications ont lieu de manière décalée dans le temps,
- dans lequel le changement de format est effectué pendant que l'installation extrude du matériau de film,
- dans lequel, pour au moins une partie des composants de l'installation, dans lesquels des modifications des réglages sont effectués, ces modifications sont effectuées successivement, dans lequel l'ordre dans lequel des modifications sont effectuées sur les différents composants de l'installation correspond à l'ordre dans lequel ces composants de l'installation influent, dans la direction de transport (z) du film, sur l'extrudat de matière plastique respectivement le film extrudé,
**caractérisé en ce que**
- la période qui s'écoule entre les modifications sur différents composants de l'installation correspond largement à la période que nécessite une portion de matériau de film déterminée, à la vitesse d'installation instantanée, pour parcourir la distance entre les zones d'influence des composants d'installation respectifs.

2. Procédé selon la revendication 1
**caractérisé en ce que**
le dispositif de commande (31) détermine, sur la base des paramètres physiques du format initial et du format final, les paramètres physiques des formats intermédiaires.

3. Procédé selon l'une des revendications précédentes,
**caractérisé en ce que**
- dans un dispositif de mémoire du dispositif de commande (31), sont enregistrées des informations,
- qui correspondent à des valeurs déterminées des paramètres physiques,
- et qui, lors de la présence de ces valeurs de ces paramètres physiques, sont prises en compte lors de la génération des signaux de commande.

4. Procédé selon la revendication précédente,
**caractérisé en ce que**
les informations enregistrées dans le dispositif de mémoire sont extraites sur la base de valeurs empiriques ou à l'aide d'instructions de calcul.

5. Procédé selon l'une des revendications précédentes,
**caractérisé en ce que**
un dispositif de calcul génère, selon des instructions de calcul, à partir des valeurs des paramètres physiques, des instructions concernant la génération de signaux de commande.

6. Procédé selon l'une des revendications précédentes,
**caractérisé en ce que**
au moins un des ventilateurs (20, 23, 27) participant au refroidissement de la bulle de film (1) est relié sans clapet avec son ouverture de sortie d'air.

7. Procédé selon la revendication précédente,
**caractérisé en ce que**
tous les ventilateurs (20, 23, 27) participant au refroidissement de la bulle de film (1) sont reliés sans clapet avec son ouverture de sortie d'air.

8. Procédé selon l'une des revendications précédentes,
**caractérisé en ce que**
un opérateur de machine effectue des réglages fins de la puissance des ventilateurs une fois que le dispositif de commande (31) a réglé, à l'aide des signaux de commande, les valeurs des ventilateurs qu'elle attribue au format final.

9. Procédé selon l'une des revendications précédentes,
**caractérisé en ce que**
le dispositif de commande (31) prend en compte, pour la détermination des signaux de commande, les réglages des ventilateurs ajustés lors de la production du film soufflé dans le format initial.

10. Procédé selon la revendication précédente,
**caractérisé en ce que**
le dispositif de commande (31) part, lors de la détermination de signaux de commande, des réglages de ventilateurs ajustés lors de la production du film soufflé dans le format initial et effectue les modifications des réglages des ventilateurs sur la base des paramètres physiques de l'état final.

11. Procédé selon l'une des revendications précédentes,
**caractérisé en ce que**
aux composants de l'installation, sur lesquels des modifications sont apportées de manière décalée dans le temps ou successivement, appartiennent également les ventilateurs qui correspondent à différents dispositifs de refroidissement.

12. Procédé selon l'une des revendications précédentes,
**caractérisé en ce que**
le dispositif de commande émet un signal d'avertissement lorsque, du fait d'une modification de format, la largeur du film posé à plat dépasse la largeur de travail maximale du dispositif d'enroulement.

13. Procédé selon l'une des revendications précédentes,
**caractérisé en ce que**
dans le dispositif de commande sont enregistrées au moins deux catégories de paramètres physiques, qui correspondent chacune à des formats finaux déterminés,
dans lequel la première catégorie de paramètres physiques comprend des valeurs de consigne pour la production en cours d'une commande,
et dans lequel l'au moins une deuxième catégorie de paramètres physiques comprend des valeurs de consigne pour le démarrage de la commande concernée.

14. Procédé selon l'une des revendications précédentes,
**caractérisé en ce que**
avant une brève interruption de production, les paramètres physiques momentanément ajustés sont enregistrés,
et ces paramètres physiques enregistrés, lors de la reprise de la production sont soit réglés à nouveau,
soit utilisés pour la détermination des paramètres physiques pour le démarrage.
